# EUROPEAN PATENT APPLICATION

(11) **EP 1 887 762 A2**
(43) Date of publication of application: **13.02.2008**
(21) Application number: 07113944.8
(22) Date of filing: 07.08.2007
(51) Int. Cl.: H04M 1/02

(54) **Portable terminal having game function**

(30) Priority: 08.08.2006 US 836540 P; 28.08.2006 KR 20060081709; 31.07.2007 KR 20070076990
(71) Applicant: Samsung Electronics Co., Ltd., Suwon-si, Gyeonggi-Do (KR)
(72) Inventor: Kim, Young S., c/o Samsung Electronics Co., Ltd., Gyeonggi-do (KR)
(74) Representative: Grünecker, Kinkeldey, Stockmair & Schwanhäusser Anwaltssozietät

(57) **Abstract**

Provided is a portable terminal having a game function. The terminal includes a main body housing (100) having a first keypad and a second keypad; a folding housing (200) having a third keypad, a hinge device (400) for rotatably coupling the folding housing to the main body housing about a first hinge axis (A1); an opening unit provided between the main housing and the folding housing along the first hinge axis; and a swing housing (300) positioned on the folding housing, swinging about a second hinge axis (A2) from the folding housing to a position longitudinally parallel with the main body housing and the folding housing, opening the first keypad and the opening unit before swinging to expose the first keypad, and closing the first keypad and the opening unit after swinging to hide the first keypad. Thus, a user interface environment can be improved in a game mode and in a phone mode.

## Description

The present invention generally relates to a portable terminal such as a cellular phone, a Personal Digital Assistant (PDA), a Hand Held Phone (HHP), a TV phone that allows convenient watching of Digital Multimedia Broadcasting (DMB) moving pictures or TV programs, a game phone, a notebook, a palm PC, or a web pad, and in particular, to a portable terminal having a game function, in which, with a folding-type portable terminal having a swing-type display device, a wide landscape mode is provided through the display device, key manipulation with both hands is convenient, and stereo sound is conveniently provided, whereby the portable terminal is convenient in a game mode as well as in a phone mode.

In terms of portability, portable terminals tend to be compact, slim, and light and have emphasized multimedia capability for a wide variety of service functions, e.g., entertainment contents including a game or entertainment function.

Conventional portable terminals may be classified into various types according to their appearance in consideration of portability and convenience in use, such as a bar type and a folder type. The folder-type portable terminal is disclosed in U.S Patent No. 6,865,406 granted to the assignee of the present application.

Additionally, the portable terminals may be further classified as a swing type and a sliding type based upon the way of opening and closing the terminals.
The sliding-type portable terminal is disclosed in detail in Korean Patent No. 2002-71911.

The swing-type portable terminal is disclosed in detail in U.S Patent Application No. 10/822,380.

However, among the conventional portable terminals, the conventional folder-type portable terminal may be sufficient in a data input operation and a displayed data check operation in a phone mode like voice communication or text message transmission. However, in multimedia environments, the promptness or accuracy of a data input operation such as key pressing is degraded in a game mode and a wide screen cannot be provided in a display unit.

The promptness and accuracy of key manipulation are more important in the game mode than in any other modes, and in particular, key manipulation using both hands instead of one hand is crucial for improving promptness and accuracy.

Inconvenience also arises in a TV mode or a Digital Multimedia Broadcasting (DMB) mode for watching of various moving pictures. In other words, there is a limitation in increasing the entire size of the display device and it is difficult to provide the display device in a landscape mode

Although the foregoing problems can be solved by increasing the size of the portable terminal, mounting a wide display unit in the portable terminal, and disposing more keys in the portable terminal, the solution goes against miniaturization and causes inconvenience in carrying the portable terminal.

A portable terminal that is easy to use in a game mode as well as in a phone mode is disclosed in U.S Patent Application No. 10/946,838 which is assigned to the assignee of the present application.

However, the portable terminal disclosed in the U.S Patent Application No. 10/946,838 causes difficult assembly due to its complex structure and is difficult to carry due to its large size.

Therefore, there is a need for a portable terminal that is convenient in a game mode as well as in a phone mode. Furthermore, an improved interface environment providing a wide display device for game virtuality in the game mode, a both-hand key manipulation system, and a stereo sound system is required.

It is, therefore, the object of the present invention to provide a portable terminal having a game function, in which, in terms of a user key manipulation interface environment with respect to the portable terminal, keys associated with a phone mode are rendered convenient for a user to manipulate and keys that are not associated with the phone mode are hidden in the phone mode, and keys associated with a game mode are rendered convenient for a user to manipulate and keys that are not associated with the game mode are hidden or non-available in the game mode, thereby providing the user interface environment having optimal key manipulation.

This object is solved by the subject matter of the independent claims.

Preferred embodiments are defined in the dependent claims.

It is an aspect of the present invention to provide a portable terminal having a game function, which allows a user to enjoy a game with game virtuality in a game mode as well as in a phone mode by providing a display device having a wide landscape view, a key manipulation system that allows data input with both hands, and stereo sound using two-speaker devices.

It is further another aspect of the present invention to provide a portable terminal having a game function, in which a hinge device serves as a stopper and a support for a display device in order to provide stability to the swing of the display device.

It is yet another aspect of the present invention to provide a portable terminal having a game function, which is easy to carry through a structure that is advantageous to miniaturization although having a wide display device and at least three keypads.

According to one aspect of the present invention, there is provided a portable terminal having a game function. The portable terminal includes a main body housing having a first keypad and a second keypad adjacent to the first keypad; a folding housing having a third keypad; a hinge device for coupling the folding housing to the main body housing with respect to a first hinge axis of the hinge device; an opening unit provided between the main housing and the folding housing along the first hinge axis; and a swing housing positioned on the folding housing, swinging from the folding housing with respect to a second hinge axis of the hinge device in order to be positioned longitudinally parallel with the main body housing and the folding housing, opening the first keypad and the opening means prior to the swinging so that the first keypad can be manipulated, and closing the first keypad and the opening unit after the swinging so that the first keypad cannot be manipulated.

The swing housing overlaps the first keypad after swinging.

The hinge device serves as a stopper for restricting the swinging of the swing housing, and a supporter for the swing housing after swinging.

The first keypad is available in a phone mode by being opened and is not available in a game mode by being closed by swing housing.

An inner face of the folding housing includes a closed area hidden before and after the swinging of swing housing.

The swing housing closes the first keypad, the opening unit, and the closed area by being positioned on them after the swinging.

The portable terminal further includes a first speaker device positioned on a top face of the swing housing and a second speaker device mounted in a corner portion of an inner face of the folding housing, wherein after swinging, the first speaker device and the second speaker device are positioned in opposition to each other to provide stereo sound.

The swing housing includes a main display device.

The second hinge axis is positioned within the closed area and is oriented perpendicular to the first hinge axis while being spaced apart from the first hinge axis.
The opening unit exists because a length of a longitudinal direction along which the hinge device extends is less than a length of a latitudinal direction of the main body housing, and a length of a longitudinal direction along which the hinge device extends is greater than a length of a longitudinal direction along which the opening unit extends.

An area occupied by the first keypad is less than 1/4 of the entire area of the top face of the main body housing.

According to another aspect of the present invention, there is provided a portable terminal having a game function. The portable terminal includes a first keypad and a second keypad integrally connected to the first keypad, a third keypad rotatably connected to the first keypad and the second keypad, a hinge device for rotatably coupling the third keypad, an opening unit provided between the first keypad and the third keypad and between the second keypad and the third keypad in adjacent to the hinge device, and a display device swinging from the third keypad in order to position longitudinally parallel with the first keypad, the second keypad, and the third keypad, opening the first keypad and the opening unit before the swinging so that the first keypad can be manipulated, and closing the first keypad and the opening unit after the swinging so that the first keypad cannot be manipulated.

The display device closes the third keypad and opens the first keypad before swinging and closes the first keypad and opens the third keypad after swinging.

The second keypad includes a first four-way key and a second four-way key, and the third keypad includes a third four-way key.

The first keypad includes keys associated with a phone mode, the second keypad includes keys associated with the phone mode and a game mode, and the third keypad includes keys associated with the game mode.

According to further another aspect of the present invention, there is provided a portable terminal having a game function. The portable terminal includes a main body housing including a first keypad and a second keypad, a folding housing including a third keypad, a hinge device for coupling the folding housing to the main body housing, an opening unit provided between the main body housing and the folding housing in a direction of a hinge axis of the hinge device, a display device, a swing housing swinging while being mounted in the folding housing in order to be positioned longitudinally parallel with the main body housing and the folding housing, opening the first keypad and the opening unit before the swinging so that the first keypad can be manipulated, and closing the first keypad and the opening unit after the swinging so that the first keypad cannot be manipulated, and a camera lens module provided coaxially in the hinge device so that it can photograph a subject irrespective of whether or not the folding housing rotates.
The camera lens module is rotatable.

Openings are formed in a bottom face of the main body housing and in a predetermined position of an outer face of the folding housing, respectively, in such a way to face the camera lens module, thereby maximizing the amount of rotation of a lens of the camera lens module.

The first keypad includes a camera manipulation key.

A length in a longitudinal direction along which the hinge device extends together with the camera lens module is less than a length of a latitudinal direction of the main body housing, and a length of a longitudinal direction along which the hinge device extends together with the camera lens module is greater than a length of a longitudinal direction along which the opening unit extends.

An area occupied by the first keypad is less than 1/4 of the entire area of the top face of the main body housing.

The above and other aspects, features and advantages of the present invention will become more apparent from the following detailed description when taken in conjunction with the accompanying drawings in which:
FIG. 1 is a perspective view of a portable terminal at a folded state and having a game function according to a first exemplary embodiment of the present invention;
FIG. 2 is a perspective view of the portable terminal at an unfolded state, having a game function, and in a phone mode according to the first exemplary embodiment of the present invention;
FIG. 3 is a front view showing a state in which a swing housing of the portable terminal having a game function according to the first exemplary embodiment of the present invention is swinging;
FIG. 4 is a perspective view showing a state in which a swing housing of the portable terminal having a game function according to the first exemplary embodiment of the present invention completely swings in a mode associated with watching of moving pictures;
FIG. 5 is a perspective view of a portable terminal at a folded state and having a game function according to a second exemplary embodiment of the present invention;
FIG. 6 is a perspective bottom view of the portable terminal in FIG. 5;
FIG. 7 is a perspective view of the portable terminal at an unfolded state, having a game function, and in a phone mode according to the second exemplary embodiment of the present invention;
FIG. 8 is a perspective bottom view of the terminal of FIG 7;
FIG. 9 is a front view showing a state in which a swing housing of the portable terminal having a game function according to the second exemplary embodiment of the present invention is swinging; and
FIG. 10 is a perspective view showing a state in which a swing housing of the portable terminal having a game function according to the second exemplary embodiment of the present invention completely swings in a mode associated with watching of moving pictures or in a game mode.
FIG. 11 is a perspective bottom view of the terminal of FIG. 10.

Exemplary embodiments of the present invention will now be described in detail with reference to the annexed drawings. In the following description, a detailed description of known functions and configurations incorporated herein has been omitted for conciseness.

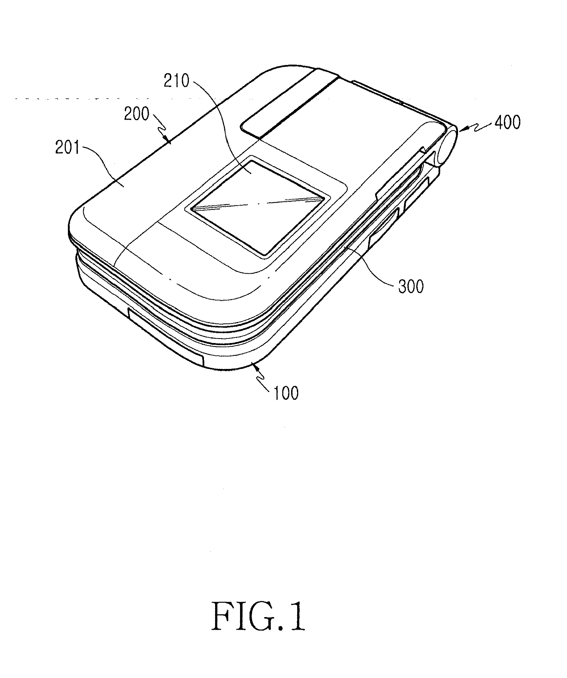

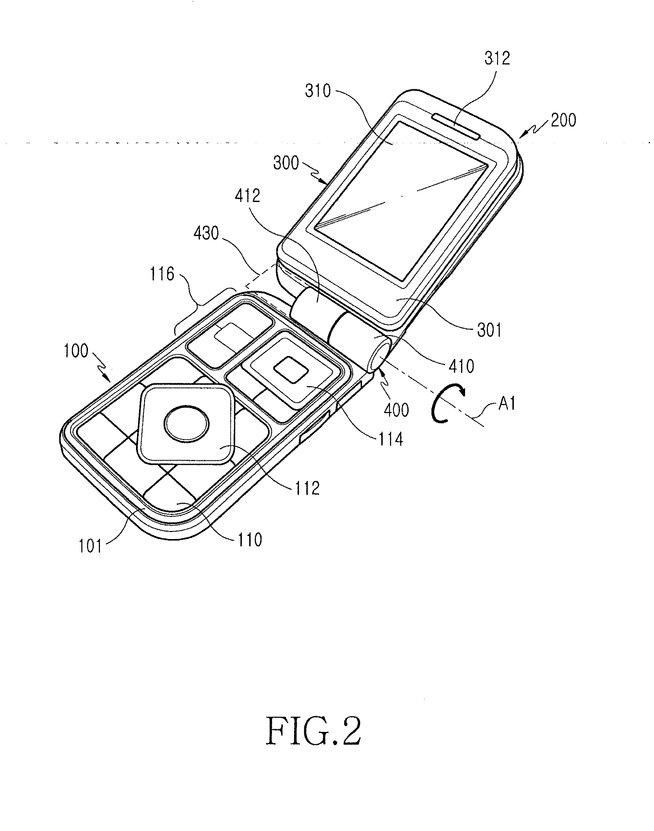

Referring to FIGs. 1 through 4, a portable terminal having a game function according to a first exemplary embodiment of the present invention includes a main body housing 100, a folding housing 200 that is coupled to the main body housing 100 by a hinge device 400 in such a way to rotate in a direction towards or away from the main body housing 100, and a swing housing 300 that is coupled to the folding housing 200 in such a way to swing in a direction towards or away from the folding housing 200 while facing the folding housing 200 in order to move away from or towards the main body housing 100. The folding housing 200 rotates over the main body housing 100 with respect to a first hinge axis A 1 by the hinge device 400 to be folded to or unfolded from the main body housing 100. The folding housing 200 is folded in FIG. 1 and is unfolded in FIG. 2.

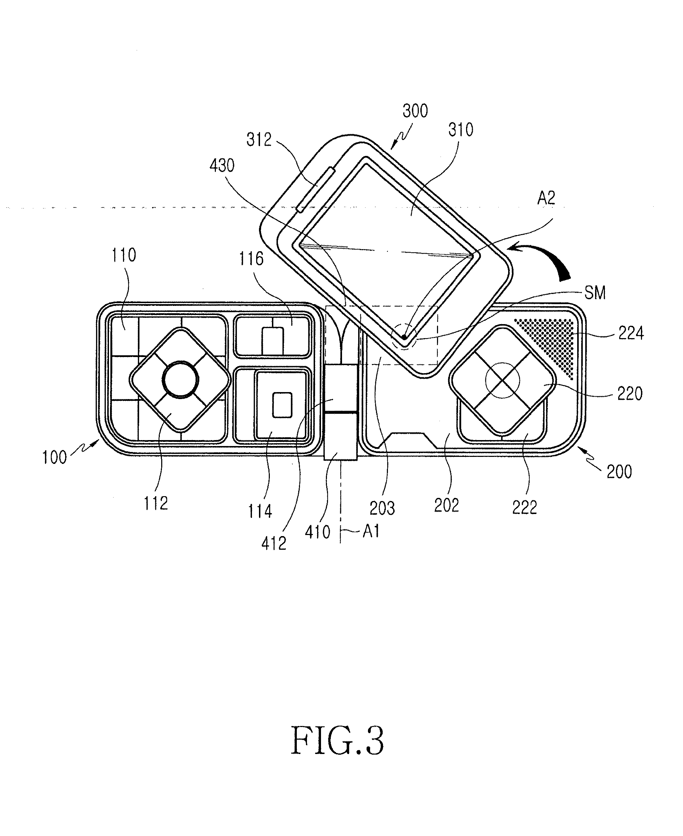

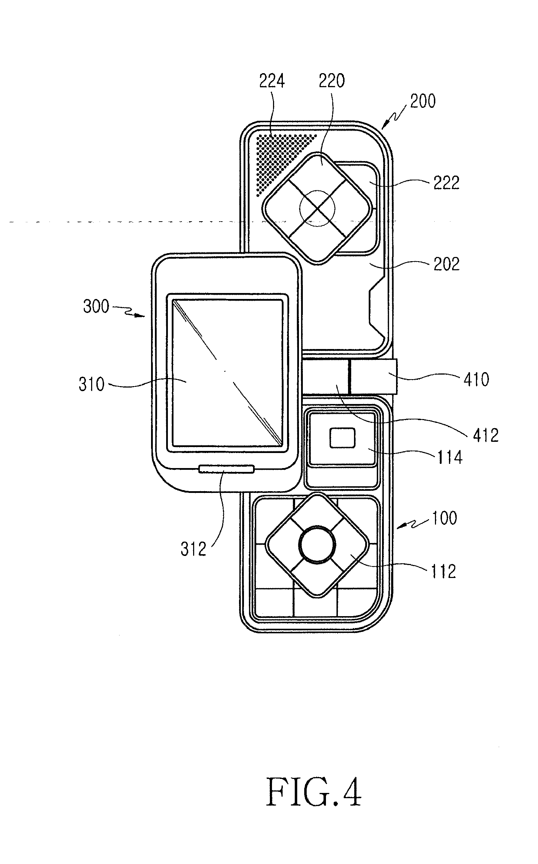

As illustrated in FIGs. 3 and 4, the swing housing 300 swings by means of a swing module SM on an inner face 202 of the folding housing 200 with respect to a second hinge axis A2 that is perpendicular to and spaced apart from the first hinge axis A1. The swing housing 300 is positioned longitudinally parallel with the main body housing 100 and the folding housing 200 after swing, and opens or closes a predetermined area of a top face 101 (see FIG. 2) of the main body housing 100 and a predetermined area of the inner face 202 of the folding housing 200 (FIGs. 3 and 4).

An opening unit 430 is provided between the main body housing 100 and the hinge device 400, and between the folding housing 200 and the hinge device 400 (FIG. 2). The opening unit 430 receives the swing housing 300 to allow the swing housing 300 to be stably supported by the hinge device 400. In particular, the opening unit 430 is located between the main body housing 100 and the folding housing 200 in the direction of the first hinge axis A1. The opening unit 430 is completely opened prior to swing of the swinging housing 300 and is closed after completion of the swing of the swing housing 300.

The swing housing 300 swings while facing the inner face 202 of the folding housing 200 to move towards the main body housing 100, as illustrated in FIG. 3. In particular, after swing, the swing housing 300 is positioned longitudinally parallel with the main body housing 100 and the folding housing 200. The hinge device 400 serves as a stopper for the swing housing 300 to restrain the swing housing 300 from swinging more than a predetermined swing angle and also serves as a support after swinging for the swing housing 300 at the back of the swing housing 300. The predetermined swing angle is about 180°. A force for swing of the predetermined swing angle is provided automatically, semi-automatically, or manually by the swing module SM. Preferably, the force is provided semi-automatically. The swing module SM is mounted across the inner face 202 of the folding housing 200 and the bottom face of the swing housing 300. After the swing, the swing housing 300 overlaps a first keypad and the opening unit 430.

As illustrated in FIGs. 2 and 3, the main body housing 100 includes a plurality of first keys 110, 112, 114, and 116 on the top face 101. According to arrangement of the first keys 110, 112, 114, and 116, the top face 101 of the main body housing 100 is divided into a first area and a second area. The division is based on whether or not the swing housing 300 swings. In other words, a first keypad is disposed in the first area and a second keypad is disposed in the second area. The first keypad is disposed in one of four corner portions of the top face 101 of the main body housing 100, which is adjacent to the opening unit 430.

More specifically, when the folding housing 200 is unfolded from the main body housing 100 as illustrated in FIGs. 2 through 4, the first keypad disposed in the first area of the top face 101 of the main body housing 100 is opened or closed by swing of the swing housing 300 and the second keypad disposed in the second area of the top face 101 of the main body housing 100 is exposed at all times when the folding housing is unfolded regardless of swing of the swing housing 300. The first keypad and the second keypad are adjacent to each other and mounted as one piece with the main body housing 100.

The first keypad includes keys associated with a phone mode and the second keypad includes keys associated with both the phone mode and a game mode. The first keypad is opened and thus becomes available in the phone mode and is closed by the swing housing 300 and thus cannot be manipulated in the game mode. In other words, in the game mode, the first keypad is hidden by the swing housing 300 and thus is non-available, thereby preventing the first keypad from being mistakenly pressed in the game mode. From user's viewpoint, it would be preferable that, in a specific mode, keys that are not associated with the specific mode be hidden rather than be opened to the user for an improved user interface environment.

The second keypad includes first and second four-way keys 112 and 114.

As illustrated in FIGs. 1 and 3, an auxiliary display device 210 is disposed in an outer face 201 of the folding housing 200 and a plurality of second keys 220 and 222 is disposed in the inner face 202 of the folding housing 200. The inner face 202 of the folding housing 200 is divided into a third area 203 and a fourth area according to arrangement of the second keys 220 and 222. When the folding housing 200 is unfolded from the main body housing 100, a third keypad is disposed in the fourth area of the inner face 202 of the folding housing 200 and is opened or closed by swing of the swing housing 300 and the third area 203 is a closed area that is closed at all times before or after swing of the swing housing 300. In other words, the third region 203 is closed at all times in a state illustrated in FIG. 2 or 4. The third area 203 has a flat face on which no key is disposed. The hidden swing module SM is disposed within the third area 203. In particular, the swing module SM is disposed in the center of the third area 203 in order to provide the second hinge axis A2 of the swing housing 300. In other words, the second hinge axis A2 is disposed within the closed area 203 and is oriented perpendicular to the first hinge axis A1 while being spaced apart from the first hinge axis A1.

As illustrated in FIGs. 2 and 3, the opening unit 430 exists because the length of the hinge device 400 is less than the width of the main body housing 100, and is greater than the length of the opening unit 430. However, the length of the hinge device 400 and the length of the opening unit 430 are not necessarily limited to the foregoing description.

Moreover, the first keypad is included in one of the four corner portions of the main body housing 100, and preferably occupies less than 1/4 of the entire region of the top face 101 of the main body housing 100. This is because the first keypad has to be located in the farthest position from a user's finger (thumb), i.e., in a position that makes manipulation of the first keypad most difficult, when the user holds the portable terminal by both hands in the game mode.

In a state as illustrated in FIG. 4, i.e., after completion of swinging of the swing housing 300, the swing housing 300 closes the first keypad, the opening unit 430, and the closed area 203 by overlapping them.

The swing housing 300 includes a main display device 310 on its top face and the main display device 310 swings together with the swing housing 300.

Referring to FIGs. 2 and 3, the main display device 310 closes the third keypad and opens the first keypad before swing and closes the first keypad and opens the third keypad after swinging.

The portable terminal according to the first exemplary embodiment of the present invention includes a first speaker device 312 on the top face of the swing housing 300 (see FIG. 2) and a second speaker device 224 at a corner portion of the inner face 202 of the folding housing 200 (see FIGs. 3 and 4). After the swing housing 300 fully swings from the folding housing 200, the first speaker device 312 and the second speaker device 224 provide stereo sound in opposition to each other. In a state as in FIG. 4, the main display device 310 is in a wide landscape mode, the second and third keypads are positioned in opposition to each other to allow the user to conveniently manipulate keys with both hands, and stereo sound is provided through the first speaker device 312 and the second device 224 to improve game virtuality in the game mode. Additionally, the first keypad is closed by the swing housing 300, thereby allowing convenient key manipulation associated with the game mode.

As illustrated in FIGs. 2 and 3, the hinge device 400 includes a first hinge arm 410 formed in the main body housing 100 and a second hinge arm 412 that is formed in the folding housing 200 and is coupled to the first hinge arm 410 by a hinge module (not shown). The first hinge arm 410 and the second hinge arm 412 are cylindrical in shape and the length of each of the first hinge arm 410 and the second hinge arm 412 is less than the length of the opening unit 430 in the direction of the first hinge axis A1.

FIG 2 shows a state of the portable terminal for convenient use in the phone mode and FIG. 4 shows a state of the portable terminal for convenient use in the game mode. In the state illustrated in FIG. 4, the portable terminal is also convenient in a TV mode or a Digital Multimedia Broadcasting (DMB) mode as well as in the game mode.

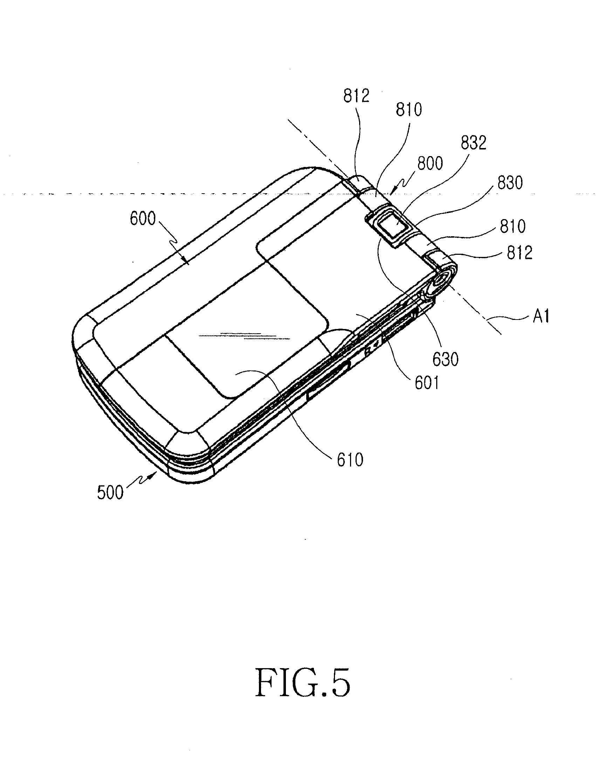

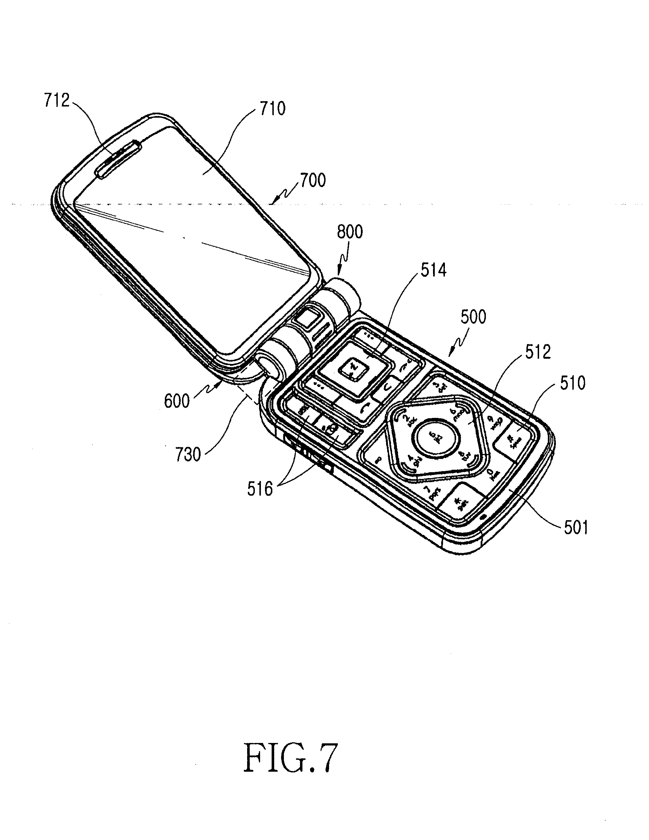

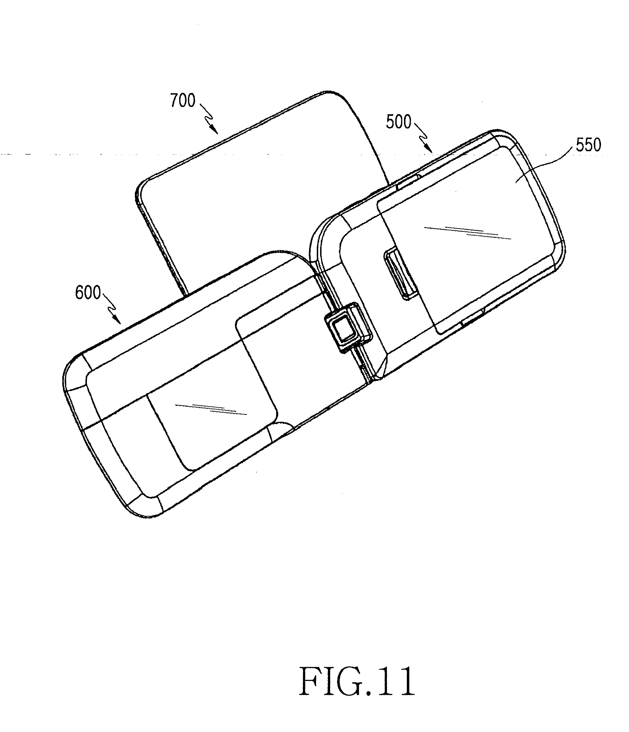

The structure of a portable terminal according to a second exemplary embodiment of the present invention will be described with reference to FIGs. 5 through 11. As illustrated in FIGs. 5 through 11, the portable terminal includes a main body housing 500, a folding housing 600 that is coupled to the main body housing 500 by a hinge device 800 in such a way to rotate in a direction towards or away from the main body housing 500, a swing housing 700 that is coupled to the folding housing 600 in such a way to swing in a direction towards or away from the folding housing 600 while facing the folding housing 600 in order to move away from or towards the main body housing 500, an opening unit 730 provided between the main body housing 500 and the folding housing 600 in a direction towards the hinge axis of the hinge device 800, and a rotational camera lens module 830 mounted coaxially in the hinge device 800. The folding housing 600 is folded or unfolded by rotating from the main body housing 500 with respect to a first hinge axis A1 by means of the hinge device 800. The folded state of the folding housing 600 is illustrated in FIG. 5 and the unfolded state of the folding housing 600 is illustrated in FIG. 7.

The camera lens module 830 is rotatable and is mounted coaxially in the hinge device 800, and more specifically between second hinge arms, in order to photograph a subject irrespective of whether or not the folding housing 600 rotates. The amount of rotation of the camera lens module 830 is greater than 180°, which can be maximized by openings 630 and 530. The camera lens module 830 is mounted in the hinge device 800, thereby contributing to miniaturization and slimness of the portable terminal. In other words, the capacity of the camera lens module 830 mounted in the portable terminal increases and thus a space for mounting the camera lens module 830 also increases. However, by providing the camera lens module 830 coaxially in the hinge device 800, the space for mounting the camera lens module 830 can be minimized in spite of the high capacity of the camera lens module 830.

As illustrated in FIGs. 7, 9, and 10, the swing housing 700 swings about a second hinge axis A2 that is spaced apart from the first hinge axis A1 and is oriented perpendicular to the first hinge axis A1 in an inner face 602 of the folding housing 600 by means of a swing module (not shown). After swinging, the swing housing 700 is positioned longitudinally parallel with the main body housing 500 and the folding housing 600, thus opening or closing a predetermined area of a top face 501 of the main body housing 500 and a predetermined area of the inner face 602 of the folding housing 600. The opening unit 730 is provided between the main body housing 500 and the hinge device 800, and between the folding housing 600 and the hinge device 800. The opening unit 730 receives the swing housing 700 to allow the swing housing 700 to be stably supported by the hinge device 800.

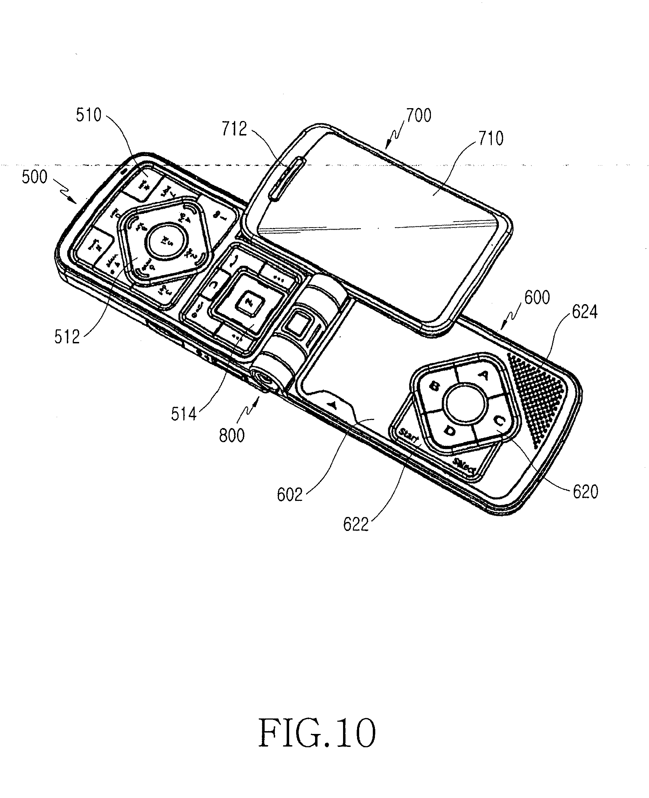

The swing housing 700 swings while continually facing the inner face 602 of the folding housing 600, finally towards the main body housing 500, as illustrated in FIG. 10. In particular, the swing housing 700 is positioned longitudinally parallel with the main body housing 500 and the folding housing 600 after swing. The hinge device 800 serves as a stopper for the swing housing 700 to restrain the swing housing 700 from swinging more than a predetermined swing angle and also serves as a support after the swing for the swing housing 700 at the back of the swing housing 700. The predetermined swing angle is about 180°. A force for swing of the predetermined swing angle is provided automatically, semi-automatically, or manually by the swing module (not shown). Preferably, the force is provided semi-automatically. The swing module is mounted across the inner face 602 of the folding housing 600 and the bottom face of the swing housing 700.

As illustrated in FIGs. 7 and 10, the main body housing 500 includes a plurality of first keys 516, 510, 512, and 514 on its top face 501. The first keys include a first keypad and a second keypad. According to arrangement of the first keys 510, 512, 514, and 516, the top face 501 of the main body housing 500 is divided into a first area and a second area. The division is based on whether the swing housing 700 is opened or closed. In other words, the first keypad is disposed in the first area and the second keypad is disposed in the second area.

More specifically, when the folding housing 600 is unfolded from the main body housing 500 as illustrated in FIGs. 7 through 11, the first keys include the first keypad disposed on the first area of the top face 501 of the main body housing 500 and opened or closed according to swinging of the swing housing 700 and the second keypad exposed irrespective of whether or not the swing housing 700 swings. The first keypad and the second keypad are adjacent to each other and mounted as one piece with the main body housing 500.

The first keypad include keys associated with a camera mode, including a camera manipulation key, and the second keypad includes keys associated with the phone mode and keys associated with the game mode. The first keypad is hidden by the swing housing 700 in the game mode, as illustrated in FIG 10. In other words, in the game mode, the first keypad is hidden by the swing housing 700 and thus cannot be manipulated, thereby preventing the first keypad from being mistakenly pressed in the game mode. From a user's viewpoint, it would be preferable that, in a specific mode, keys that are not associated with the specific mode be hidden rather than be opened to the user for an improved user interface environment. In addition, from the user's viewpoint, it would be preferable that, in the specific mode, only keys that are associated with the specific mode be opened, thereby improving a user interface environment.

The second keypad includes two first and second four-way keys 512 and 514.

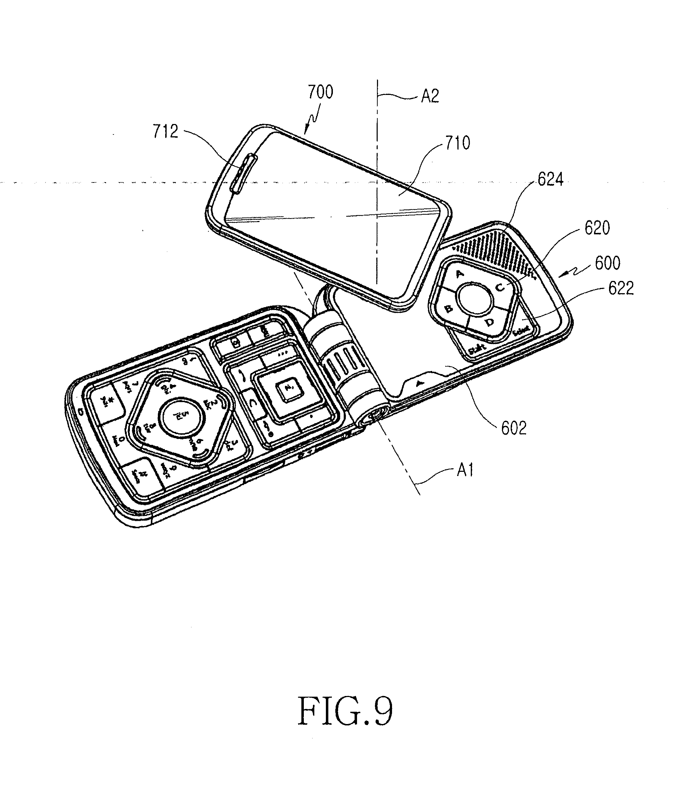

As illustrated in FIGs. 5 and 9, an auxiliary display device 610 is disposed in an outer face 601 of the folding housing 600 and a plurality of third keys 620 and 622 are disposed in the inner face 602 of the folding housing 600. The swing housing 700 includes a main display device 710 on its top face, and the main display device 710 swings together with the swing housing 700.

Referring to FIGs. 7 and 10, the main display device 710 closes the third keypad and opens the first keypad 516 prior to swing and closes the first keypad and opens the third keypad after swinging.

The portable terminal according to the second exemplary embodiment of the present invention includes a first speaker device 712 on the top face of the swing housing 700 and a second speaker device 624 at a corner portion of the inner face 602 of the folding housing 600. After the swing housing 700 fully swings from the folding housing 600, the first speaker device 712 and the second speaker device 624 provide stereo sound in opposition to each other.

In a state as in FIG. 10, the main display device 710 is in a wide landscape mode, the second keypad and the third keypad are positioned in opposition to each other to allow the user to conveniently manipulate keys with both hands, and stereo sound is provided through the first speaker device 712 and the second device 624 to improve game virtuality in the game mode.

As illustrated in FIGs. 5 and 7, the hinge device 800 includes a pair of first hinge arms 810 formed in the main body housing 500 and a pair of second hinge arms 812 that are formed in the folding housing 600 and are coupled to the first hinge arms 810 by a hinge module (not shown). The first hinge arms 810 and the second hinge arms 812 are cylindrical in shape and the length of each of the first hinge arm 810 and the second hinge arm 812 is less than the length of the opening unit 730 in the direction of the first hinge axis A1. The camera lens module 830 is rotatably disposed between the pair of second hinge arms 810 and is disposed coaxially with the first hinge axis A1.

FIG. 7 shows a state of the portable terminal that can be conveniently used in the phone mode or a camera mode, and FIG. 10 shows a state of the portable terminal that can be conveniently used in a TV mode for watching various moving pictures, a game mode, and a DMB mode. In particular, the state of FIG. 10 provides an interface environment that is very convenient in the game mode.

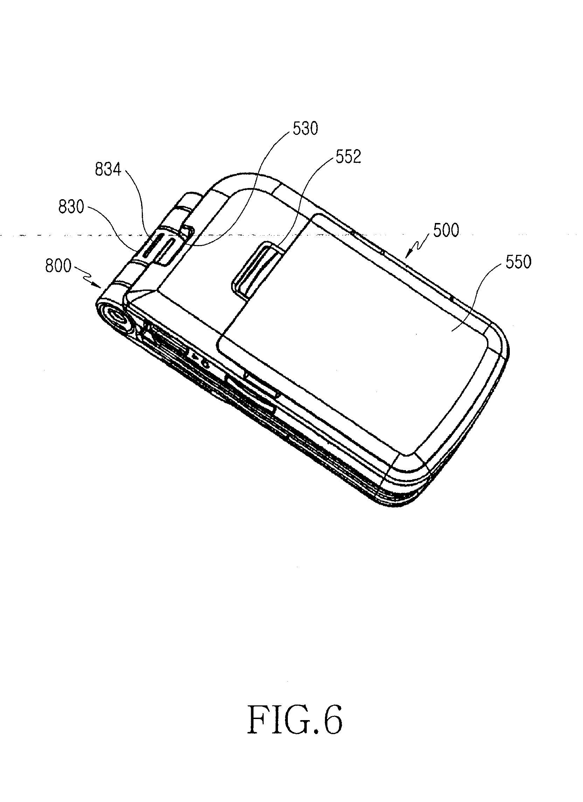

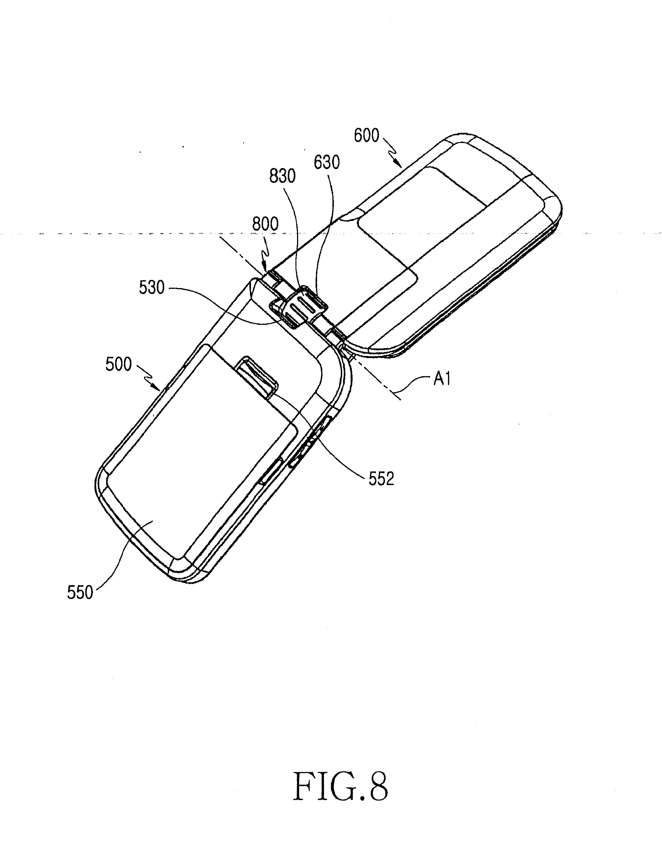

As illustrated in FIGs. 6 and 8, a battery pack 550 is disposed on the bottom face of the main body housing 500 in such a way to be detached by a locking knob 552. Moreover, the openings 530 and 630 are included on the bottom face of the main body housing 500 and in a predetermined position 630 of an outer face of the folding housing 600, respectively, in such a way to face the camera lens module 830, thereby maximizing the amount of rotation of a lens of the camera lens module 830.

As illustrated in FIG. 7, the length of the hinge device 800 is is less than the width of the main body housing 500, and is greater than the length of the opening unit 730. Of course, the length of the hinge device 800 and the length of the opening unit 730 can be changed.

It is preferable that the first keypad be positioned in one of four corner portions of the top face 501 of the main body housing 500, which is adjacent to the opening unit 730. In the game mode, when the user holds the portable terminal by both hands, the first keypad is positioned in the farthest position from a finger, especially a thumb. It is also preferable that the first keypad be hidden due to inconvenience in key manipulation and the first keypad occupy less than 1/4 of the entire region of the top face 501 of the main body housing 500.

As is apparent from the foregoing description, according to the first exemplary embodiment of the present invention, key manipulation is convenient in the phone mode and a user interface environment associated with key manipulation is improved in the game mode. In other words, the first keypad is related to the phone mode and thus is opened or closed according to whether or not the swing housing swings, thereby providing convenience in key manipulation to the user.

According to the second exemplary embodiment of the present invention, the first keypad associated with the camera mode is hidden by the swing housing, thereby making key manipulation using both hands convenient in the game mode.

Moreover, by providing a large main display device in a landscape mode, convenient key manipulation with both hands, and stereo sound, user's convenience in the game mode as well as in the phone mode can be maximized and game virtuality can be actually provided.

In particular, the high-capacity camera lens module is mounted in the hinge device, thereby minimizing the entire size of the portable terminal and thus improving portability. Furthermore, openings are formed in the main body housing and the folding housing, respectively, thereby maximizing the amount of rotation of a lens of the camera lens module.

Furthermore, the hinge device serves as a stopper and a support for the swing housing including the main display device, thereby allowing the display device to be stably disposed or to stably swing.

While the invention has been shown and described with reference to exemplary embodiments thereof, it will be understood by those skilled in the art that various changes in form and details may be made therein without departing from the scope of the invention.

## Claims

1. A portable terminal having a game function, comprising:
a main body housing including a first keypad and a second keypad adjacent to the first keypad;
a folding housing including a third keypad;
a hinge device for rotatably coupling the folding housing to the main body housing with respect to a first hinge axis;
an opening unit provided between the main housing and the folding housing and along the first hinge axis; and
a swing housing positioned on the folding housing, the swing housing swinging about a second hinge axis from the folding housing to be positioned longitudinally parallel with the main body housing and the folding housing, the swing housing opening the first keypad and the opening unit prior to swinging so that the first keypad can be manipulated, and the swing housing closing the first keypad and the opening unit after the swinging so that the first keypad cannot be manipulated.

2. The portable terminal of claim 1, wherein after swinging, the swing housing overlaps the first keypad.

3. The portable terminal of claim 2, wherein the opening unit exists because a length of the hinge device is less than a width of the main body housing, and is greater than a length of the opening unit.

4. The portable terminal of one of claims 1 to 3, wherein the hinge device serves as a stopper for restricting swinging of the swing housing, and a supporter for the swing housing after swinging.

5. The portable terminal of one of claims 1 to 4, wherein the first keypad is disposed in one of corner portions of the main body housing, which is adjacent to the opening unit.

6. The portable terminal of one of claims 1 to 5, wherein the first keypad is available in a phone mode by being opened and is not available in a game mode by being closed by the swing housing.

7. The portable terminal of one of claims 1 to 6, wherein an inner face of the folding housing comprises a closed area hidden before and after swinging of the swing housing.

8. The portable terminal of claim 7, wherein after swinging, the swing housing overlaps the first keypad, the opening unit, and the closed area.

9. The portable terminal of claim 7, wherein the second hinge axis is positioned within the closed area and is perpendicular to the first hinge axis while being spaced apart from the first hinge axis.

10. The portable terminal of one of claims 1 to 9, further comprising:
a first speaker device positioned on a top face of the swing housing; and a second speaker device mounted in a corner portion of an inner face of the folding housing,
wherein after swinging, the first speaker device and the second speaker device are positioned in opposition to each other to provide stereo sound.

11. The portable terminal of one of claims 1 to 10, wherein the swing housing comprises a main display device.

12. The portable terminal of one of claims 1 to 11, wherein an area occupied by the first keypad is less than 1/4 of an entire area of a top face of the main body housing.

13. A portable terminal having a game function, comprising:
a first keypad and a second keypad integrally connected to the first keypad;
a third keypad rotatably connected to the first keypad and the second keypad;
a hinge device for rotatably coupling the third keypad to the first keypad;
an opening unit provided between the first keypad and the third keypad and between the second keypad and the third keypad, the opening unit adjacent to the hinge device; and
a display device swinging from the third keypad in order to be positioned longitudinally parallel with the first keypad, the second keypad, and the third keypad, the display device opening the first keypad and the opening unit before the swinging so that the first keypad can be manipulated, and closing the first keypad and the opening unit after swinging so that the first keypad cannot be manipulated.

14. The portable terminal of claim 13, wherein the display device closes the third keypad and opens the first keypad before swinging, and closes the first keypad and opens the third keypad after swinging.

15. The portable terminal of claim 13 or 14, wherein the second keypad includes a first four-way key and a second four-way key, and the third keypad includes a third four-way key.

16. The portable terminal of one of claims 13 to 15, wherein the first keypad includes keys associated with a phone mode, the second keypad includes keys associated with the phone mode and a game mode, and the third keypad includes keys associated with the game mode.

17. A portable terminal having a game function, comprising:
a main body housing including a first keypad and a second keypad;
a folding housing including a third keypad and rotatable about a hinge axis;
a hinge device for coupling the folding housing to the main body housing, the hinge device receiving the hinge axis;
an opening unit provided between the main body housing and the folding housing and along the hinge axis;
a display device;
a swing housing swinging while being mounted in the folding housing in order to be positioned longitudinally parallel with the main body housing and the folding housing, the swing housing opening the first keypad and the opening unit before swinging so that the first keypad can be manipulated, and closing the first keypad and the opening unit after swinging so that the first keypad cannot be manipulated; and
a camera lens module provided coaxially in the hinge device so that the camera lens module can photograph a subject irrespective of whether the folding housing rotates.

18. The portable terminal of claim 17, wherein the camera lens module is rotatable about the hinge axis.

19. The portable terminal of claim 17 or 18, wherein a plurality of openings are formed in a bottom face of the main body housing and in a predetermined position of an outer face of the folding housing, respectively, in such a way to face the camera lens module, thereby maximizing a rotation angle of the camera lens module.

20. The portable terminal of one of claims 17 to 19, wherein the first keypad comprises a camera manipulation key.

21. The portable terminal of one of claims 17 to 20, wherein a length of the hinge device is less than a width of the main body housing, and is greater than a length of the opening unit.

22. The portable terminal of one of claims 17 to 21, wherein an area occupied by the first keypad is less than 1/4 of an entire area of a top face of the main body housing.
